# DEMANDE DE BREVET EUROPEEN

(11) **EP 0 991 032 A1**
(43) Date de publication de la demande: **05.04.2000**
(21) Numéro de dépôt: 99402265.5
(22) Date de dépôt: 15.09.1999
(51) Int. Cl.: G07F 7/08

(54) **Procédé d'utilisation d'une carte en mode prépayé**

(30) Priorité: 29.09.1998 FR 9812173
(71) Demandeur: SCHLUMBERGER Systèmes, 92120 Montrouge (FR)
(72) Inventeur: Zaitsev, Yadim, Moscou (RU)

(57) **Abrégé**

L'invention concerne un procédé d'utilisation en mode prépayé d'une carte (10) comportant une pluralité de N répertoires i (i = 1, ...N, N >= 2), chaque répertoire i contenant un fichier (ACM)i d'un nombre total d'unités consommées. L'invention se caractérise en ce que ledit procédé comprend au moins les étapes consistant à créer dans chaque répertoire i un fichier (ACM Max)i d'un nombre d'unités consommables et à fournir, en contrepartie d'un règlement financier, à un utilisateur de ladite carte (10), un code (CODE i) affecté à un répertoire i, après que le nombre total d'unités consommées (ACM)i-1 dans le répertoire précédent i-1 a atteint le nombre d'unités consommables (ACM Max)i-1. L'invention s'applique en particulier dans le domaine de la téléphonie mobile.

## Description

La présente invention concerne un procédé d'utilisation en mode prépayé d'une carte comportant une pluralité de N répertoires i (i = 1, ...N, N >= 2), chaque répertoire i contenant un fichier (ACM)i d'un nombre total d'unités consommées.

L'invention trouve une application particulièrement avantageuse dans le domaine de la téléphonie mobile.

Dans le domaine de la téléphonie mobile, une carte téléphonique à circuit intégré peut contenir N répertoires i, chaque répertoire i étant associé, par exemple, à un compte utilisateur différent utilisable sur un réseau de téléphonie mobile appartenant à un opérateur donné. En mode de fonctionnement classique, ledit opérateur envoie une facture à l'utilisateur du compte utilisé à une échéance donnée, par exemple tous les mois, grâce à un système de facturation qui utilise ledit réseau de téléphonie mobile.

Il est souhaitable d'utiliser ladite carte en mode prépayé de la même manière qu'une carte à mémoire, appelée télécarte, utilisée dans un appareil téléphonique publique, afin par exemple d'éviter à certains clients d'avoir des dépassements de factures non souhaités. On pourrait imaginer d'avoir un compte utilisateur rechargeable.

Il existe deux procédés de rechargement dudit compte utilisateur :
- un procédé Pa permettant de recharger ledit compte utilisateur via un lecteur connecté à un ordinateur. Toutefois, il est connu que ce procédé Pa comporte des problèmes de sécurité, dûs notamment à la saisie d'un code utilisateur sur un clavier de l'ordinateur et à l'authentification de plusieurs autres codes via un programme installé sur l'ordinateur permettant d'effectuer ledit procédé Pa de rechargement. En effet lesdits codes sont momentanément mémorisés dans une mémoire de l'ordinateur, codes qui peuvent donc être momentanément accessibles de l'extérieur par un fraudeur.
- un procédé Pb permettant de recharger ledit compte utilisateur via un réseau de télécommunication hertzien, comportant un serveur et des programmes permettant d'effectuer le procédé Pb. Toutefois, outre qu'il est coûteux, ce procédé Pb comporte certains problèmes de fiabilité. En effet, une des étapes du procédé Pb est d'envoyer à la carte téléphonique une commande de rechargement dudit compte utilisateur via ledit réseau de télécommunication. Or il peut arriver que la carte ne reçoive pas la commande à cause d'un encombrement survenu dans ledit réseau de télécommunication.

Aussi le problème technique à résoudre par l'objet de la présente invention est de proposer un procédé d'utilisation en mode prépayé d'une carte comportant une pluralité de N répertoires i (i = 1, ...N, N >= 2), chaque répertoire i contenant un fichier (ACM)i d'un nombre total d'unités consommées, procédé qui permettrait d'obtenir un système peu coûteux, sécurisé et fiable.

La solution au problème technique posé consiste, selon la présente invention, en ce que ledit procédé comprend au moins les étapes consistant à créer dans chaque répertoire i un fichier (ACM Max)i d'un nombre d'unités consommables et à fournir, en contrepartie d'un règlement financier, à un utilisateur de ladite carte, un code affecté à un répertoire i, après que le nombre total d'unités consommées (ACM)i1 dans le répertoire précédent i-1 a atteint le nombre d'unités consommables (ACM Max)i-1

Ainsi, comme on le verra en détail plus loin, le procédé de l'invention permet de sécuriser l'utilisation de la carte, en mode prépayé, en évitant les fraudes dûes à la présence momentanée du code utilisateur et aussi d'autres codes dans la mémoire d'un ordinateur, lors d'un rechargement de la carte via un lecteur connecté audit ordinateur, et permet de fiabiliser l'utilisation de la carte en évitant les problèmes de fiabilité dûs en particulier à un encombrement d'un réseau de télécommunication lors de l'envoi d'une commande de rechargement de la carte via ledit réseau de télécommunication, inconvénients rencontrés avec les procédés Pa, Pb de rechargement précités. En outre, comme on le verra également en détail plus loin, ledit procédé de la présente invention permet une utilisation de la carte à moindre coût contrairement aux procédés de rechargement précités qui mettent en jeu des systèmes particulièrement onéreux.

La description qui va suivre en regard des dessins annexés, donnés à titre d'exemples non limitatifs, fera bien comprendre en quoi consiste l'invention et comment elle peut être réalisée.

La figure 1 est un schéma d'une carte téléphonique telle qu'utilisée par le procédé de la présente invention.

La figure 2 est un schéma d'une mémoire de données de la carte de la figure 1.

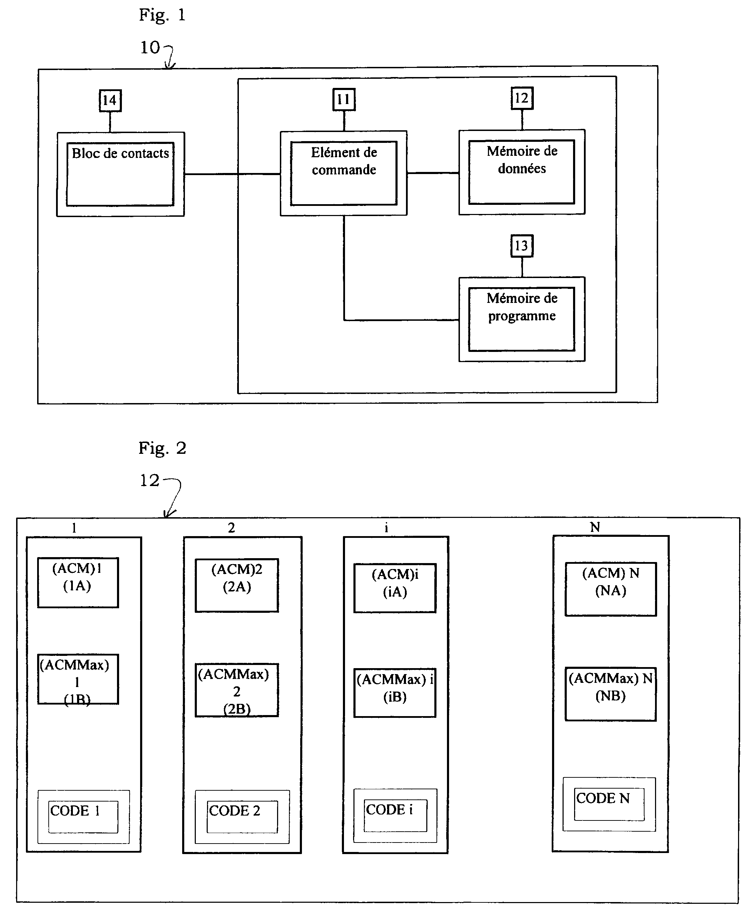

Sur la figure 1 est représentée une carte téléphonique 10 destinée à être utilisée dans un appareil téléphonique, en particulier un appareil téléphonique mobile.

Cette carte 10 contient un élément 11 de commande (par exemple une unité centrale de traitement ou CPU), une mémoire 12 de données, une mémoire 13 de programme, et un bloc 14 de contacts destiné à la connexion électrique avec par exemple un connecteur d'un appareil téléphonique mobile.

La mémoire 12 de données est représentée sur la figure 2. Cette mémoire de données contient N répertoires i (i = 1, ...N, N >= 2) associés à un même et seul opérateur d'un réseau de téléphonie mobile, chaque répertoire i contenant un fichier (ACM)i du nombre total d'unités téléphoniques consommées au cours des différentes communications téléphoniques, dont la valeur est variable de façon incrémentale et est intialisée par exemple à 0, avant que ladite carte ne soit fournie à un utilisateur.

Afin d'utiliser la carte 10 en mode prépayé, il est proposé un procédé comportant au moins les étapes consistant à créer un fichier (ACM Max)i dans chacun des répertoires i de ladite carte, à associer un code CODE i à chacun desdits répertoires i comme le montre la figure 2 et à fournir à l'utilisateur cesdits codes permettant l'utilisation des répertoires i , en contrepartie de règlements financiers, de la manière suivante : un premier code CODE 1 utilisateur est fourni à l'utilisateur, en contrepartie d'un premier règlement financier permettant la mise en service de la carte sur un réseau de télécommunication et incluant le coût de la carte à circuit intégré, code CODE 1 utilisateur permettant l'utilisation du premier répertoire 1. Lorsque le nombre total d'unités total consommées (ACM) 1 dans ledit répertoire 1 a atteint la valeur du nombre d'unités consommables (ACM Max)1, un deuxième code CODE 2 utilisateur est fourni à l'utilisateur, en contrepartie du deuxième règlement financier, incluant simplement le coût d'utilisation d'un deuxième répertoire, l'utilisateur va pouvoir utiliser cedit deuxième répertoire contenant les fichiers (ACM)2 et (ACM Max)2 jusqu'à ce que le nombre (ACM)2 ait atteint la valeur du nombre (ACM Max)2 ; le procédé est suivi jusqu'à ce que tous les répertoires i contenant un fichier (ACM Max)i aient été utilisés par l'utilisateur, chacun des codes CODE i utilisateurs (i > 1) suivants étant fournis en contrepartie d'un règlement financier, incluant simplement le coût d'utilisation dudit répertoire i.

A chaque fois que ledit utilisateur veut utiliser un répertoire i, il saisit le code CODE i associé sur un appareil téléphonique notamment un appareil téléphonique mobile. On comprend que cela évite ainsi les inconvénients de présenter un code utilisateur ou d'authentifier d'autres codes via un ordinateur et donc d'utiliser un lecteur de cartes connecté à un ordinateur, un clavier d'ordinateur et un ordinateur. De ce fait, un fraudeur ne risque pas de s'emparer dudit code utilisateur ou desdits autres codes d'authentification en accédant, directement ou par l'intermédiaire du réseau auquel serait connecté l'ordinateur, à la mémoire dudit ordinateur dans laquelle les différents codes auraient été mémorisés avant d'être, soit transmis audit lecteur, soit soumis à la carte. De même, un fraudeur ne pourra pas s'emparer des différents codes en envoyant au circuit intégré de la carte une instruction de mémorisation de code dans une mémoire du circuit intégré à laquelle ledit fraudeur pourrait accéder ultérieurement. Ainsi, les risques de fraudes et donc les problèmes de sécurité liés à l'utilisation d'un clavier d'ordinateur et à un ordinateur sont évités grâce au procédé mis en place par la présente invention.

Dans ledit procédé de l'invention, une étape supplémentaire consiste à fixer toutes les valeurs desdits nombres d'unités consommables (ACM Max)i avant de fournir ladite carte téléphonique à l'utilisateur. Ainsi, comme on peut le constater, ledit procédé évite aussi les désavantages liés à l'initialisation d'une valeur (ACM Max)i via un réseau de télécommunication hertzien, désavantages liés à des problèmes de fiabilité puisque une commande de réinitialisation envoyée à ladite carte téléphonique via ledit réseau risque de ne pas être transmise à ladite carte dans le cas d'un encombrement dudit réseau de télécommunication.

Enfin, d'après le procédé de l'invention décrit précédemment, on comprend que cedit procédé permet une utilisation à moindre coût en mode prépayé de la carte téléphonique 10, à la fois pour les fournisseurs de ladite carte et pour l'utilisateur de ladite carte, puisque ledit procédé permet d'utiliser un nombre N de fois la même carte téléphonique 10 en mode prépayé au lieu d'utiliser un nombre N de cartes téléphoniques une seule fois en mode prépayé, et ne fait appel à aucun des systèmes coûteux comportant des ordinateurs, des lecteurs, des serveurs ou des programmes divers, les coûts desdits systèmes étant souvent eux-aussi inclus dans la contrepartie financière généralement demandée à un utlisateur d'une carte utilisée en mode prépayé.

Bien entendu, bien que la description a été faîte avec une carte téléphonique, on peut imaginer que le procédé de l'invention peut être appliqué à une carte où les unités consommables et consommées sont des unités monétaires telles que celles comprises dans les cartes appelées cartes porte-monnaie électronique.

## Revendications

1. Procédé d'utilisation en mode prépayé d'une carte (10) comportant une pluralité de N répertoires i (i = 1, ...N, N >= 2), chaque répertoire i contenant un fichier (ACM)i d'un nombre total d'unités consommées, caractérisé en ce que ledit procédé comprend au moins les étapes consistant à créer dans chaque répertoire i un fichier (ACM Max)i d'un nombre d'unités consommables et à fournir, en contrepartie d'un règlement financier, à un utilisateur de ladite carte (10), un code (CODE i) affecté à un répertoire i, après que le nombre total d'unités consommées (ACM)i-1 dans le répertoire précédent i-1 a atteint le nombre d'unités consommables (ACM Max)i-1.

2. Procédé d'utilisation selon la revendication 1, caractérisé en ce que la carte est une carte téléphonique.
